# EUROPEAN PATENT SPECIFICATION

(11) **EP 2 233 969 B1**
(45) Date of publication and mention of the grant of the patent: **15.05.2013**
(21) Application number: 10003172.3
(22) Date of filing: 24.03.2010
(51) Int. Cl.: G02F 1/1333, G02F 1/1343

(54) **Liquid crystal display device**
Flüssigkristallanzeigevorrichtung
Dispositif d'affichage à cristaux liquides

(30) Priority: 24.03.2009 JP 2009071603; 26.03.2009 JP 2009076885
(43) Date of publication of application: 29.09.2010
(60) Divisional application: 12001009.5
(73) Proprietor: Stanley Electric Co., Ltd., Meguro-ku Tokyo 153-8636 (JP)
(72) Inventor: Horii, Masatoshi, Tokyo (JP); Iwamoto, Yoshihisa, Tokyo (JP)
(74) Representative: Wagner, Karl H.

(56) References cited:
- US-A- 4 624 530

## Description

### BACKGROUND OF THE INVENTION

>

### A) FIELD OF THE INVENTION

This invention relates to a liquid crystal display device, and more specifically to a liquid crystal display device realizing uniformity of display.

### B) DESCRIPTION OF THE RELATED ART

A vertical alignment liquid crystal display device of which liquid crystal molecules in a liquid crystal layer are oriented vertically toward a substrate has a good black level when no voltage is applied and an excellent viewing angle property by adopting optical compensation plates having proper parameters and negative optical anisotropy on one side or both sides of a liquid crystal cell between upper and lower polarizers (e.g., refer to Japanese Laid-Open Patent 2006-243102).

Recently "multi-domain alignment", in which liquid crystal molecules are oriented to a plurality of directions in one pixel, is commonly used for a vertical alignment liquid crystal display device. For example, a multi-domain alignment wherein orientations of liquid crystal molecules are controlled by generating an oblique electric field by forming slit shaped apertures in a pixel electrode (e.g., refer to Japanese Laid-Open Patent 2004-212582) has been proposed. Moreover, a multi-domain alignment wherein orientations are controlled by a slope of a projection formed in a pixel electrode (e.g., refer to Japanese Laid-Open Patent 2006-243102) has been proposed. However, for example, an electrode structure for generating an oblique electric field or formation of a projection on a substrate surface decreases an aperture ratio in a pixel of a dot matrix display region and so drops transmission of a liquid crystal display device.

In case of regarding a viewing angle property in left and right directions of a liquid crystal display device as important, mono-domain alignment wherein uniformed alignment process is performed all over a liquid crystal cell can be used instead of the above-described multi-domain alignments. The uniformed alignment process can be realized by a so-called photo-alignment process to a vertical alignment film (e.g., refer to Japanese Laid-Open Patent 2004-212582) or a rubbing process to a vertical alignment film having specific surface free energy (e.g., refer to Japanese Laid-Open Patent 2006-243102).

In a mono-domain vertical alignment liquid crystal display device, orientations of liquid crystal molecules are controlled uniformly in a liquid crystal cell regardless of applying a voltage or not. Steepness in electro-optical property depends largely on a pretilt angle in a liquid crystal layer and improves as a pretilt angle close to 90 degrees. At that time, it is necessary for avoiding orientation defects when a voltage is applied to generate a pretilt angle to slightly incline liquid crystal molecules toward a substrate under applying zero voltage.

Moreover, for realizing good transmission at state of display ON under a high duty ratio drive condition of not less than 1/32 and for realizing high contrast in a vertical alignment liquid crystal display device, it is effective to control retardation of a liquid crystal layer Δnd (Δn: birefringence of liquid crystal material, d: a thickness of liquid crystal layer) to be larger under the high duty ratio drive condition of not less than 1/32 than under a low duty ratio drive condition.

Furthermore, driving methods can be classified into an active matrix using an active element such as TFTs and a passive matrix. The passive matrix is used for a character display which displays seven segments or arbitral symbols and a dot-matrix display which displays dots with vertically and horizontally aligned electrodes. A dot-matrix display displays ON/OFF by applying a voltage waveform to a horizontally aligned scanning electrode and a vertically aligned signal electrode. The voltage waveform at that time, which is called multiplex drive or duty drive, is defined by arbitral duty ratio and bias ratio, and an optimized bias method, an active addressing method which selects all the scanning electrodes, a multiline selection method or a multi-line addressing method which selects a plurality of the scanning electrodes is used. Generally the scanning electrodes are sequentially selected in one direction. Contents of display are read out from a display data RAM in a driving circuit, and the display data are displayed one screen by one screen via a segment driver connected to the signal electrodes and a common driver connected to the scanning electrodes.

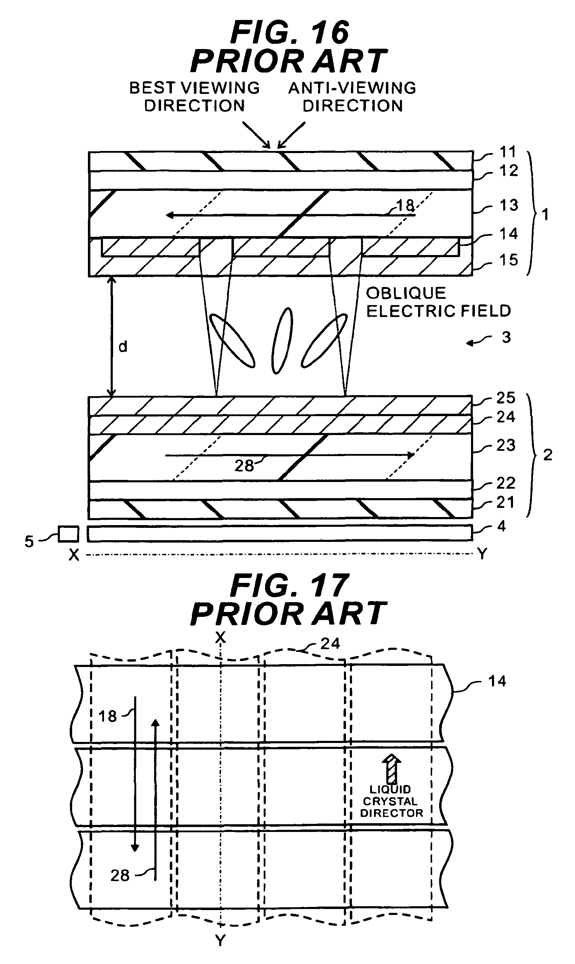

Fig. 16 is a schematic cross sectional view showing one example of a vertical alignment liquid crystal display device according to a prior art. The cross sectional view shows a section along with a line X-Y shown in Fig. 17.

A first substrate (upper substrate) 1 and a second substrate (lower substrate) 2 are facing to each other, and a liquid crystal layer 3 is placed between the substrates 1 and 2. The first substrate 1 consists of a transparent substrate 13, transparent electrodes (common electrodes) 14 formed on a surface facing to the second substrate 2 of the transparent substrate 13, a vertical alignment film 15 applied on the transparent electrodes 14, a surface of the vertical alignment film 15 being rubbed in a direction represented by an arrow 18, and a viewing angle compensation plate 12 and a polarizer 11 placed on an outer surface. The second substrate 2, similar to the first substrate 1, consists of a transparent substrate 23, transparent electrodes (segment electrodes) 24 formed on a surface facing to the first substrate 1 of the transparent substrate 23, a vertical alignment film 25 covering a surfaces of the transparent electrodes 24, a surface of the vertical alignment film 25 being rubbed in a direction represented by an arrow 28, and a viewing angle compensation plate 22 and a polarizer 21 placed on an outer surface. The liquid crystal layer 3 includes liquid crystal molecules having a property of orientating vertically to surfaces of the substrates 1 and 2 and has a pretilt at an angle (about 89.9 degrees in this example) toward a vertical direction of the substrate by the rubbing processes 18 and 28. Moreover, a back light 4 and a light source 5 are placed under the lower substrate 2.

Fig. 17 is a schematic plan view showing electrode patterns of the transparent electrodes (common electrodes) 14 and the transparent electrodes (segment electrodes) 24 shown in Fig. 16. This plan view depicts the liquid crystal display device shown in Fig. 16 viewed from the normal direction. The same components as in Fig. 16 are marked with the same reference numbers as in Fig. 16, and explanations for the same components are omitted.

In Fig. 17, lower electrodes are the segment electrodes 24 in a rectangle electrode shape extending to six o'clock to 12 o'clock direction, and upper electrodes are the common electrodes 14 in a rectangle electrode shape extending to perpendicular direction of the lower eletrodes. Each rectangle region where the segment electrode 24 and the common electrode 14 intersect forms one pixel.

The best viewing angle is the six o'clock direction because of a direction to which liquid crystal molecules in a mid-plane of the liquid crystal layer 3 tilt under application a voltage. On the other hand, angles degrading image quality because transmission of ON state drops by varying viewing angle toward the vertical direction exist in the opposite direction (anti-viewing angle).

The conventional vertical alignment liquid crystal display device shown in Fig. 16 is fabricated by using liquid crystal layer of retardation Δnd of about 900nm, and appearance of the liquid crystal display device is observed under applying voltage of 1/64 duty and 1/9 bias multiplex drive condition. In the observation, even if the viewing angles are varied in the best viewing angle and in the left and right direction, a whole area of a dot-matrix display region realizes uniformed display state. On the other hand, display uniformity is not sufficient in a range of about 70 degrees clockwise and counterclockwise from the anti-viewing angle. Especially observing from the anti-viewing angle, the display is grainy and a quality of display may be remarkably degraded.

US-A-4,624,530 discloses a field effect mode liquid crystal display element displaying dot matrix pattern includes a cut-out portion formed either in the upper or lower electrode so that liquid crystal display molecules can be prevented from being inversely oriented at the edge of such a portion where these electrodes cross each other as might otherwise occur. The cutout portion prevents the liquid crystal display molecules from being inversely oriented at the edge of such a portion where these electrodes cross each other, thus significantly improving display quality. In addition, since such a cutout portion is provided by merely cutting off part of an electrode to prevent the unwanted inversion of LCD molecules during orientation, no specific signal process is required.

### SUMMARY OF THE INVENTION

It is an object of the present invention to provide a vertical alignment liquid crystal display device which can realize display uniformity.

According to the present invention, there is provided a liquid crystal display device as set forth in claim 1. Preferred embodiments of the present invention may be gathered from the dependent claims.

According to the present invention, a vertical alignment liquid crystal display device which can realize display uniformity can be provided.

### BRIEF DESCRIPTION OF THE DRAWINGS

Fig. 1 is a schematic cross sectional view showing a structure of a liquid crystal display device 100 according to the present invention.
Fig. 2 is a schematic plan view showing an example of electrode patterns of common electrodes 34 and segment electrodes 24 of the liquid crystal display device 100 according to the present invention.
Fig. 3 is a plan view showing a shape of a cut formed in the common electrodes 34 according to the present invention.
Fig. 4A to Fig. 4D are enlarged plan views showing the electrode patters for one pixel according to the present invention.
Fig. 5A to Fig. 5D are front observation photographs of liquid crystal display devices using the electrode patters shown in Fig. 4A to Fig. 4D.
Fig. 6 is a schematic cross sectional view showing a structure of another liquid crystal display device 200.
Fig. 7 is a schematic plan view showing an example of electrode patterns of segment electrodes 44 and common electrodes 14 of the liquid crystal display device 200.
Fig. 8 is a plan view showing an electrode pattern having apertures 44a.
Fig. 9A to Fig. 9D are schematic plan views showing electrode patterns A1 to A4.
Fig. 10A to Fig. 10D are front observation photographs of liquid crystal display devices using the electrode patters shown in Fig. 9A to Fig. 9D with a pretilt angle of about 89.95 degrees.
Fig. 11A to Fig. 11D are front observation photographs of liquid crystal display devices using the electrode patters shown in Fig. 9A to Fig. 9D with a pretilt angle of about 89.9 degrees.
Fig. 12 is a plan view showing an electrode pattern having apertures 44b.
Fig. 13A to Fig. 13D are schematic plan views showing electrode patterns B1 to B4.
Fig. 14A to Fig. 14D are front observation photographs of liquid crystal display devices using the electrode patters shown in Fig. 13A to Fig. 13D with a pretilt angle of about 89.95 degrees.
Fig. 15A to Fig. 15D are front observation photographs of liquid crystal display devices using the electrode patters shown in Fig. 13A to Fig. 13D with a pretilt angle of about 89.9 degrees.
Fig. 16 is a schematic cross sectional view showing one example of a vertical alignment liquid crystal display device according to a prior art.
Fig. 17 is a schematic plan view showing an electrode pattern of the transparent electrodes (common electrodes) 14 and the transparent electrodes (segment electrodes) 24 shown in Fig. 16.
Fig. 18 is a photograph of the electrode patterns and electrode structures in the alignment direction shown in Fig. 17 viewed from a front of the liquid crystal display device at ON state.
Fig. 19 is a diagram showing distribution of the liquid crystal directors in one pixel at ON state to the electrode patterns and the electrode structures in the alignment direction shown in Fig. 17.
Fig. 20 is a graph showing changes in transmission when a viewing angle is tilted to a polar angle in the best viewing angle or in the anti-viewing angle.
Fig. 21 is a photograph of the electrode patterns and electrode structures in the alignment direction shown in Fig. 17 viewed from the anti-viewing angle at ON state.

### DESCRIPTION OF THE PREFERRED EMBODIMENTS

The inventors of the present invention have analyzed a cause of display nonuniformity when viewing a liquid crystal display device from the anti-viewing angle and have realized that an oblique electric field generated between electrodes causes the display nonuniformity.

As shown in Fig. 16, it is well known that an oblique electric field is generated between the electrodes at edges of the electrode patterns, and especially a vertical alignment liquid crystal display device is easily affected by the oblique electric field.

Liquid crystal molecules with negative dielectric anisotropy used for a vertical alignment liquid crystal display device tilt to a direction perpendicular to an electric field. In the oblique electric field generated at the edges of the electrode patterns, the molecules tilt similarly to the direction perpendicular to an electric field. The liquid crystal molecules (director) tilt toward the left and right outside because an electric field gradually widening toward the lower substrate 2 is generated at the edges of the common electrodes 14. Similarly an electric field gradually thinning toward the upper substrate 1 is generated at the edges of the segment electrodes 24, the liquid crystal molecules (director) tilt toward the left and right inside. Therefore, when a direction of the liquid crystal director by the oblique electric field generated at the edges of the electrode patterns is different from a direction of the liquid crystal director by an alignment process, a black line like domain boundary as a dark region is recognized in a border.

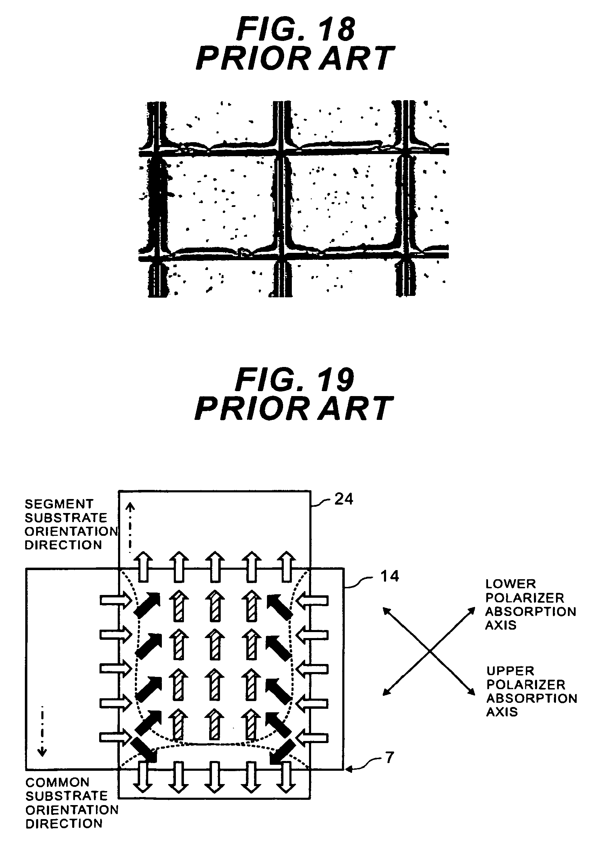

Fig. 18 is a photograph of the electrode patterns and electrode structures in the alignment direction shown in Fig. 17 viewed from a front of the liquid crystal display device at ON state. A white region can be considered as a region where vertically aligned liquid crystal molecules tilt to the alignment direction and light can propagate by passing through the polarizers in the crossed Nicol arrangement. Dark regions around the white region are considered to be regions where light does not propagate and orientations of the liquid crystal molecules are non-uniform.

As shown in Fig. 18, 180-degree-rotated U-shaped dark lines are observed along with a rectangle shape of pixels. Causes of generation of those dark lines will be explained with reference to Fig. 19.

Fig. 19 is a diagram showing distribution of the liquid crystal directors in one pixel at ON state and the electrode structures in the alignment direction shown in Fig. 17.

At the center of the pixel the liquid crystal molecules tilt to an up direction in the drawing in accordance with an up/down direction alignment process, and so light is depolarized and able to propagate. Near the left and right edges the liquid crystal molecules tilt to an oblique direction by the synergistic effect of horizontal fringe electric field and the up/down direction alignment process, and so light is not depolarized due to generation of component agree with polarization axis of the polarizers and light shielding state is kept.

The liquid crystal directors depicted with hatched arrows at the center of the pixel are oriented to the 12 o'clock direction by orientation directions of the upper substrate 1 and the lower substrate 2 because an oblique electric field does not exist at the center. Orientations of the liquid crystal directors depicted with white arrows near the edges of the pixel are affected by the oblique electric field. The liquid crystal layer 3 has a property as a continuum and therefore the liquid crystal directors rotate 90 degrees continuously from the center of the pixel to the left and right edges of the pixel. In the drawing, the 90 degrees continuous rotation is represented simply by the liquid crystal directors depicted with black arrows rotated ±45 degrees in the mid part. Moreover, because the directions of the liquid crystal directors at the center of the pixel and those near the edges are opposite to each other, there are a boundary region where the liquid crystal directors at the center of the pixel and those near the edges are oriented in 180 degrees different directions and discontinuous regions near a side 7 of the lower part of the pixel (the lower part in the drawing).

Under the above-described situation, when the absorption axes of the lower and the upper polarizers are tilted ±45 degrees to the orientation directions of the substrates, a liquid crystal director region with the black arrows and the boundary region near the lower side 7 of the pixel where the liquid crystal directors at the center and near the edge are reversed are in parallel or almost in parallel to the absorption axes of the lower and the upper polarizers. Therefore, light cannot pass through those regions and dark lines are observed there.

It is assumed that the liquid crystal molecules are kept perpendicular to the substrate even if a voltage is applied in the discontinuous region. The discontinuous region is recognized as an intersection point of the dark lines, and it is considered that a dot shape dark region is formed because liquid crystal molecules are not tilted even if a voltage is applied. In this specification, this region consists of dark lines including the intersection point is called a "black cross".

It is considered that the black cross is generated because the orientation direction of liquid crystal molecules becomes in parallel or near parallel to the absorption axes of the polarizers or because liquid crystal molecules stay almost perpendicular to the substrate even if a voltage is applied.

When black crosses near the lower edges in Fig. 18 are observed, the intersection points are found, and a phenomenon in which number and positions of intersection points are different in each pixel is observed. It is considered that the difference in number of black crosses and the positions of the black crosses cause a change in an area ratio of a region where the orientation direction differs from other area (e.g., the center part of the pixel) near the edges. The inventors think that the above-described phenomenon can be considered as a cause of display nonuniformity when the liquid crystal display device is observed from the anti-viewing angle.

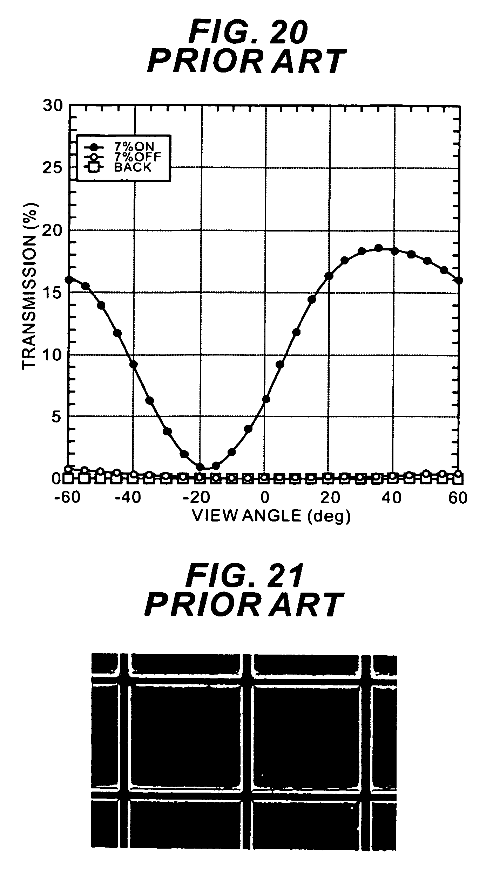

Fig. 20 is a graph showing changes in transmission when a viewing angle is tilted to a polar angle in the best viewing angle or in the anti-viewing angle.

When front ON transmission is 7%, transmission becomes higher as tilting a viewing angle more in the best viewing angle (0 to 60 degrees) comparing to viewed from a front (a direction perpendicular to a liquid crystal display screen). On the other hand, there is an angle (around -20 degrees) where the transmission becomes minimum in the anti-viewing angle (-60 to 0 degrees). When viewing a head of the rod like liquid crystal molecules straight down, birefringence does not occur; therefore, this angle corresponds to the minimum transmission.

OFF transmission when front ON transmission is 7% is basically low; however, transmission becomes slightly higher as tilting a viewing angle more either in the best viewing angle or in the anti-viewing angle comparing to viewed from the front (the direction perpendicular to a liquid crystal display screen). With regard to background transmission, transmission remains almost same if a viewing angle is tilted.

Fig. 21 is a photograph of the electrode patterns and electrode structures in the alignment direction shown in Fig. 17 viewed from the anti-viewing angle at ON state.

Transmission at the center part of the pixel is low in the anti-viewing angle; therefore, it is understood that light passes through only the edge regions of the pixel. These edge regions are the black cross region when viewed from the front (e.g., Fig. 18), and if a viewing angle is varied clockwise or counter clock wise from the anti-viewing angle, distribution of the liquid crystal directors in the black cross region affect the transmission. As described in the above, number and a position of intersection points of black crosses are different in each pixel; therefore, it is considered that the distribution of the liquid crystal directors in the black cross region is different in each pixel. Assuming that the distribution of the liquid crystal directors in the black cross region consists of about right 45 degrees and left 45 degrees, areas (sizes) of a right 45-degree region and left 45-degree region are expected to be different. In this case, transmission when a viewing angle is varied clockwise from the anti-viewing angle and transmission when a viewing angle is changed counterclockwise from the anti-view direction become different, and display when a plurality or all the pixels are viewed is not uniform. Therefore, the liquid crystal display device will be low in a display quality, have less display uniformity.

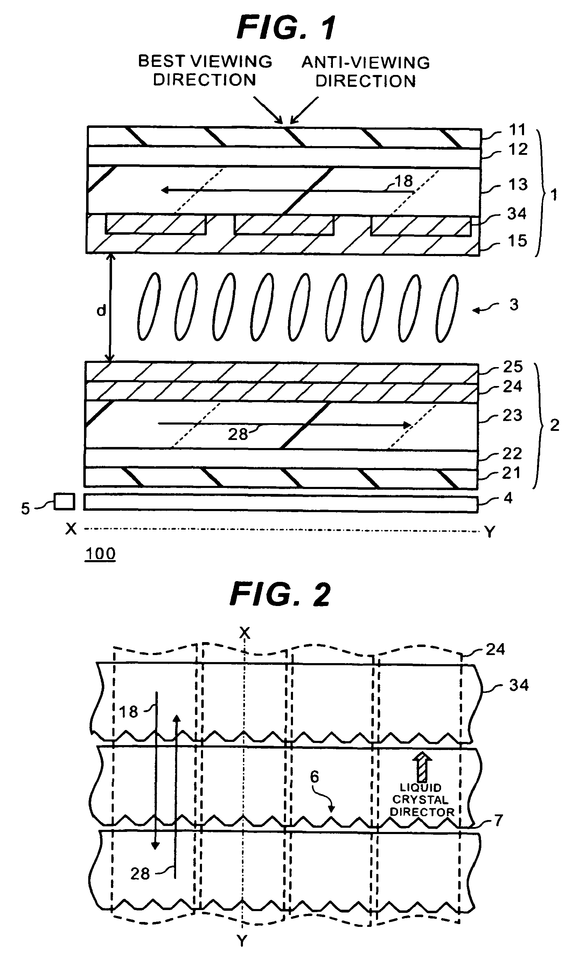

Fig. 1 is a schematic cross sectional view showing a structure of a liquid crystal display device 100 according to the present invention. This cross sectional view shows a section along with a line X-Y shown in Fig. 2. The liquid crystal display device 100 is a mono-domain vertical alignment liquid crystal display having dot-matrix electrode patterns.

A common electrode substrate (upper substrate) 1 and a segment electrode substrate (lower substrate) 2 are facing to each other, and a liquid crystal layer 3 is placed between the substrates 1 and 2. The common electrode substrate 1 consists of a transparent substrate 13, transparent electrodes (common electrodes) 34 formed on a surface facing to the second substrate 2 of the transparent substrate 13, a vertical alignment film 15 applied on the transparent electrodes 14, a surface of the vertical alignment film 15 being rubbed in a direction represented by an arrow 18, and a viewing angle compensation plate 12 and a polarizer 11 placed on an outer surface. The segment electrode substrate 2, similar to the common electrode substrate 1, consists of a transparent substrate 23, transparent electrodes (segment electrodes) 24 formed on a surface of the transparent substrate 23 facing the first substrate 1, a vertical alignment film 25 covering a surfaces of the transparent electrodes 24, a surface of the vertical alignment film 25 being rubbed in a direction represented by an arrow 28, and a viewing angle compensation plate 22 and a polarizer 21 placed on an outer surface. The liquid crystal layer 3 includes liquid crystal molecules having a property of orientating vertically to surfaces of the substrates 1 and 2 and has a pretilt at a predetermined angle (about 89.9 degrees in this embodiment) toward a vertical direction of the substrate by the rubbing processes 18 and 28. Moreover, a back light 4 and a light source 5 are placed under the lower substrate 2. An insulating film, etc. for avoiding short-circuit between the substrates may be formed between the transparent electrodes 34 and the vertical alignment film 15 of the substrate 1 and between the transparent electrodes 24 and the vertical alignment film 25 of the substrate 2.

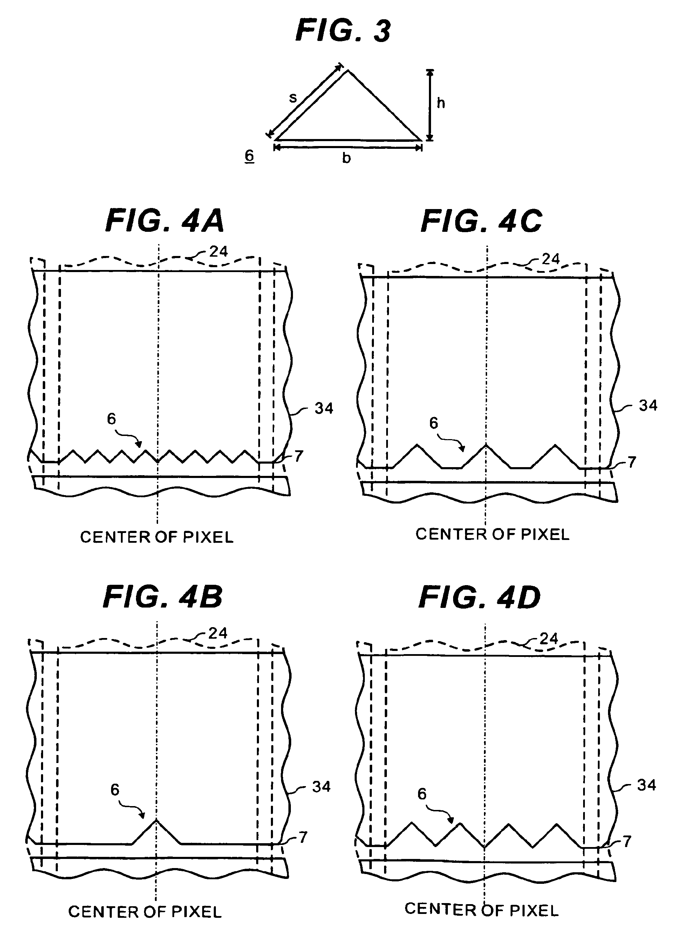

The common electrodes 34 are formed of transparent electrodes made of ITO and consist of 64 lines of bar shaped electrodes with 460µm width and 15µm interval between the adjacent electrodes. As shown in the later explained Fig. 4A to Fig. 4D, a triangle cut 6 is or triangle cuts 6 are formed on a lower side 7.

For example, an indium tin oxide (ITO) film which is a transparent film is formed on each substrate with a thickness of 500nm by CVD, vapor deposition, spattering, etc., and formed into one of the ITO electrode patterns shown in Fig. 4A to Fig. 4D by photolithography.

The segment electrodes 24 are formed of transparent electrodes made of ITO as same as the common electrodes 34 and consist of 196 lines of bar shaped electrodes with 460µm width and 15µm interval between the adjacent electrodes. The cut 6 is not formed in the segment electrodes 24.

As an alignment process, vertical alignment films SE-1211 (a product of Nissan Chemical Industries, LTD.) are formed by flexographic printing and baked, and thereafter a pretilt angle of 89.5 degrees are given by treatment such as rubbing etc. to the films. To make an anti-parallel orientation, a pretilt direction of the segment electrode substrate (lower substrate) 2 is set to 12 o'clock direction (where the right side is 0 degree, 12 o'clock direction is a position 90 degrees rotated counterclockwise. The left side in Fig. 1), and a pretilt direction of the common electrode substrate (upper substrate) 1 is set to 6 o'clock direction (where the right side is 0 degree, 6 o'clock direction is a position 90 degrees rotated clockwise. The right side in Fig. 1). Any alignment methods which can realize a rubbing process uniformly in a pixel can be used. For example, ultraviolet radiation to the vertical alignment films, oblique deposition of metal oxide, alignment method using an oblique spatter film, etc. can be used.

A cell thickness d is set to 4.0µm by spraying spacers. Liquid crystal with negative dielectric anisotropy (Δε=-2.6, Δn=0.20) is used as liquid crystal material. There is no limitation on material properties such as Δn, etc. as far as the liquid crystal material with negative Δε.

An angle of absorption axis of the upper polarizer 11 is set to 45 degrees and that of the lower polarizer 21 is set to 135 degrees. SHC-13U, a product of Polatechno Co., Ltd., is used for the polarizers. It is preferable to polarizers to cross at 90 degrees for good black state; however, it can be shifted at several degrees. Moreover, either iodine type polarizers or dyed polarizers can be used for polarizer material.

Two C plates (ΔRe=0nm, ΔRth=220nm) are laminated between the polarizer and the substrate for each of the optical compensation plates 12 and 22. Optical compensation plates (A plates, C plates, B plates: biaxial films) can be inserted to both spaces between the polarizers and the substrates.

Fig. 2 is a schematic plan view showing an example of electrode patterns of common electrodes 34 and segment electrodes 24 of the liquid crystal display device 100 according to the first embodiment of the present invention. This plan view shows the liquid crystal display device 100 observed from the vertical direction (a direction perpendicular to the main surface of the liquid crystal display device 100). In this example, the later-described third electrode pattern shown in Fig. 4C is applied to the common electrodes 34. The explanations for the same components as in Fig. 1 are omitted by adding them with the same reference numbers.

In Fig. 2, lower electrodes are the segment electrodes 24 in a rectangle electrode shape extending from six o'clock to 12 o'clock direction, and upper electrodes are the common electrodes 34 in a rectangle electrode shape extending to a direction crossing the extending perpendicular direction of the lower electrodes. Each rectangle region where the segment electrode 24 and the common electrode 34 intersect forms one pixel.

The best viewing angle is the six o'clock direction because of a direction to which liquid crystal molecules in a mid-plane of the liquid crystal layer 3 tilt under application a voltage. On the other hand, angles degrading image quality because transmission of ON state drops by varying viewing angle toward the vertical direction exist in the opposite direction.

Fig. 3 is a plan view showing a shape of a cut formed in the common electrodes 34 according to the first embodiment of the present invention.

The inventors observed the liquid crystal display devices 100 with first to fourth electrode patterns shown in Fig. 4A to Fig. 4D to which a cut or cuts 6 each of which is in a shape of an isosceles triangle having a length b of the base, a height h, a length s of the slope with a vertical angle of 90 degrees (hereinafter just called "the triangle cut" or "the triangle cuts") is/are formed. A size, a position of each cut 6 a number of the cuts 6 in electrode patterns are different from each other. Those liquid crystal display devices 100 were actually manufactured and driven with a voltage by which sufficient contrast can obtain under a driving condition of 1/64 duty, 1/9 bias at driving frequency of 120 Hz for the observation.

In all the electrode patterns each cut 6 is formed on the side (side 7 in the drawings) where the directions of the liquid crystal directors (a direction to which liquid crystal molecules tilt) defined by the alignment process at the center of the pixel and the direction of the liquid crystal directors (a direction to which liquid crystal molecules tilt) defined by the oblique electric field near the edges of the pixel are opposite (reversed) to each other.

Fig. 4A to Fig. 4D are enlarged plan views showing the electrode patterns for one pixel according to the first embodiment of the present invention. In the drawings, solid lines depict the common electrode patterns, and broken lines depict the segment electrode patterns.

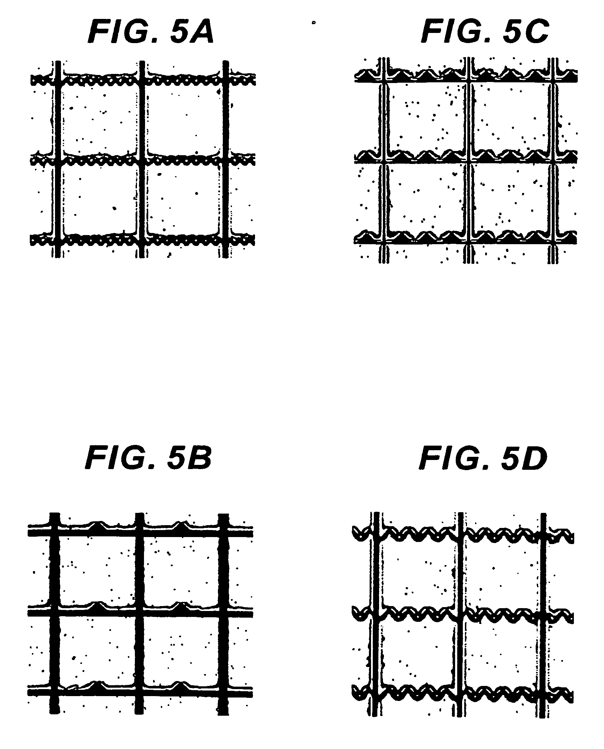

Fig. 5A to Fig. 5D are front observation photographs of liquid crystal display devices using the electrode patters shown in Fig. 4A to Fig. 4D.

Moreover, as described in the above, in the conventional liquid crystal display device, shapes and intersection points of the black crosses are different by each pixel, and the display is grainy in the anti-viewing angle (Fig. 18).

Fig. 4A is the first electrode pattern, and Fig. 5A is a front observation photograph of the liquid crystal display device with the first dot-matrix electrode pattern.

In the first electrode pattern, the triangle cuts 6, a shape of each triangle cut is shown in Fig. 3, are continuously formed on the common electrode 34 with the base length b of 50µm, the height h of 25µm, and the slope length s of 35µm. In this first electrode pattern, the black cross was formed not along with the triangle cuts. The shapes and the intersection points of the black crosses were not fixed and the same phenomenon as in the conventional device is observed.

Fig. 4B is the second dot-matrix electrode pattern, and Fig. 5B is a front observation photograph of the liquid crystal display device with the second dot-matrix electrode pattern.

In the second electrode pattern, the triangle cut 6 shown in Fig. 3 is formed on the common electrode 34 with the center of the base in the horizontal center of a pixel. The triangle cut 6 in the second electrode pattern has the base length b of 100µm, the height h of 50µm, and the slope length s of 70µm. In this second electrode pattern, the black cross was observed along with edges of the triangle cut 6. Moreover, the intersection point was found at the apex of the triangle. The liquid crystal directors were distributed oriented evenly in right and left of the apex.

The black cross along with the edges of the cut was not observed in the first electrode pattern with the slope length s of 35µm, and the black cross along with the edges of the cut was observed in the second electrode pattern with the slope length s of 70µm. Therefore, it is considered that the slope length s of about 50µm or more is necessary for fixing a black cross, and the slope length s of 70µm or more is preferable.

Although the intersection point of the black cross was fixed at the apex of the triangle cut 6 in the second electrode pattern, an intersection was found in straight line parts on both sides of the triangle cut 6 (where no triangle cut 6 was formed on the side 7). Therefore, display was grainy in places although it was less grainy than that of the conventional one.

Fig. 4C is the third dot-matrix electrode pattern, and Fig. 5C is a front observation photograph of the liquid crystal display device with the third dot-matrix electrode pattern.

In the third electrode pattern three triangle cuts 6 with the same size (b=100µm, h=50µm, s=70µm) as the triangle cut 6 in the second electrode pattern are distributed with equal spaces between them with centering at the horizontal center of a pixel. The space between triangle cuts 6 is 40µm. In this third electrode pattern, similar to the second electrode pattern, the intersections of the black crosses were fixed at the apexes of the triangle cuts, and the black crosses were observed along with the edges of the triangle cuts 6. A difference between this third electrode pattern and the second electrode pattern is that the straight line parts on the bottom side of the pixel in the second electrode pattern (the straight line parts on both side of the triangle cut 6) are 180µm whereas the straight line parts on the bottom side of the pixel in the third electrode pattern (the straight line parts between the adjacent triangle cuts 6) are 40µm, and the black crosses were fixed on the edges and no intersection was found on the straight line parts in the third electrode pattern.

Fig. 4D is the fourth dot-matrix electrode pattern, and Fig. 5D is a front observation photograph of the liquid crystal display device with the fourth dot-matrix electrode pattern.

In the fourth electrode pattern a plurality of triangle cuts 6 (four triangle cuts 6 in this example) with the same size (b=100µm, h=50µm, s=70µm) as the triangle cut 6 in the second and the third electrode patterns are continuously formed without spaces between the adjacent triangle cuts 6 on the side 7 with centering at the horizontal center of a pixel. In the fourth electrode pattern, similar to the second and the third electrode patterns, the intersections of the black crosses were fixed at the apexes of the triangle cuts, and the black crosses were observed along with the edges of the triangle cuts 6. Moreover, there are no straight line parts in this fourth electrode pattern; therefore, the phenomenon in which a black cross is found on a straight line part as in the second electrode pattern was not observed.

From the above-described observations, it is understood that setting the length of the slope s to 50µm, preferably to 70µm and the length of the straight part between the triangle cuts 6 to 70µm or less, preferably to 40µm or less, the intersection of the black cross can be fixed at the apex of the triangle cut 6, the black cross can fixed along with the edges of the triangle cuts 6, and also the black cross can be fixed along with the edge of the common electrode 34 between the triangle cuts 6. Under the condition, the black cross is fixed (the number of intersections of the black crosses and their positions, etc. are uniformed among a plurality of the pixels), and the liquid crystal directors are distributed equally in right and left. Therefore, display nonuniformity occurred in about 70 degrees clockwise or counterclockwise from the anti-viewing angle can be cancelled.

As described in the above, according to the present invention, the distribution of the liquid crystal directors in the boundary region can be uniformed by forming the triangle cut or cuts 6 on the side 7 of the common electrodes where the liquid crystal directors (a direction to which liquid crystal molecules tilt) defined by the alignment process at the center of the pixel and the liquid crystal directors (a direction to which liquid crystal molecules tilt) defined by the oblique electric field near the edges of the pixel are opposite (reversed) to each other in the liquid crystal display device using the dot matrix electrode pattern. Therefore, display nonuniformity occurred in about 70 degrees clockwise or counterclockwise from the anti-viewing angle can be cancelled, and display uniformity similar to that from the best viewing angle can be obtained from the anti-viewing angle.

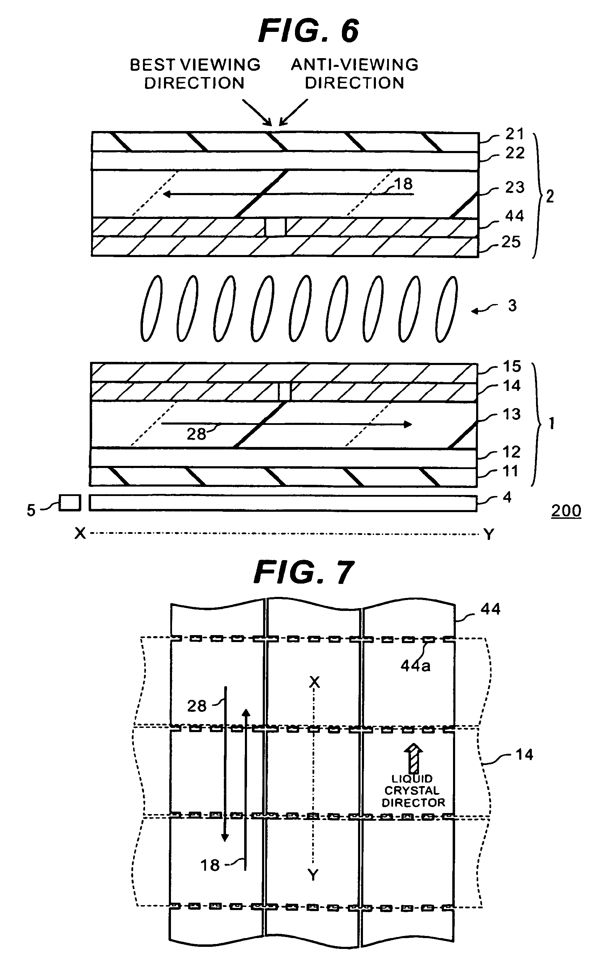

Fig. 6 is a schematic cross sectional view showing a structure of another liquid crystal display device 200. The liquid crystal display device 200 is a mono-domain vertical alignment liquid crystal display device having a dot-matrix electrode pattern.

The segment electrode substrate (upper substrate) 2 and the common electrode substrate (lower substrate) 1 are facing to each other, and a liquid crystal layer 3 is placed between the substrates 2 and 1. The segment electrode substrate 2 consists of the transparent substrate 23, transparent electrodes (segment electrodes) 44 formed on the surface facing to the transparent substrate 13, a vertical alignment film 25 covering surfaces of the transparent electrodes 44, the surface of the vertical alignment film 25 being rubbed in a direction represented by 28, and the viewing angle compensation plate 22 and a polarizer 21 placed on an outer surface.

The common electrode substrate 1, similar to the segment electrode substrate 2, consists of a transparent substrate 13, transparent electrodes (common electrodes) 14 formed on a surface facing to the transparent substrate 23, a vertical alignment film 15 covering surfaces of the transparent electrodes 14, a surface of the vertical alignment film 15 being rubbed in a direction represented by an arrow 18, and a viewing angle compensation plate 12 and a polarizer 11 placed on an outer surface.

The liquid crystal layer 3 includes liquid crystal molecules having a property of orientating vertically to surfaces of the substrates 1 and 2 and has a pretilt at a predetermined angle toward a vertical direction of the substrate by the rubbing processes 18 and 28. Moreover, a back light 4 and a light source 5 are placed under the lower substrate 2. An insulating film, etc. for avoiding short-circuit between the substrates may be formed between the transparent electrodes 44 and the vertical alignment film 25 of the substrate 2 and between the transparent electrodes 14 and the vertical alignment film 15 of the substrate 1.

The segment electrodes 44 are formed of transparent electrodes made of ITO and consist of 128 lines of bar shaped electrodes with 460µm width and 15µm interval between the adjacent electrodes.

The common electrodes 14 are formed of transparent electrodes made of ITO and consist of 64 lines of bar shaped electrodes with 460µm width and 15µm interval between the adjacent electrodes.

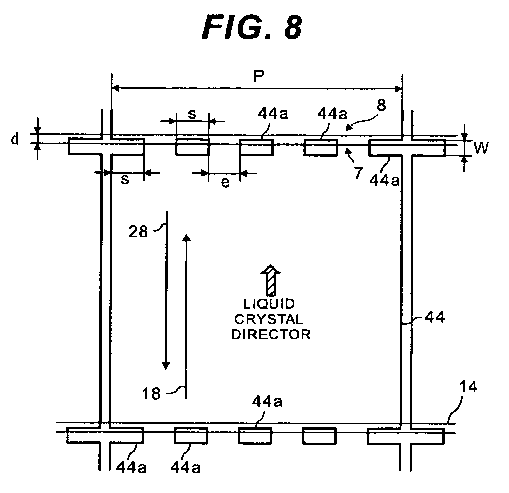

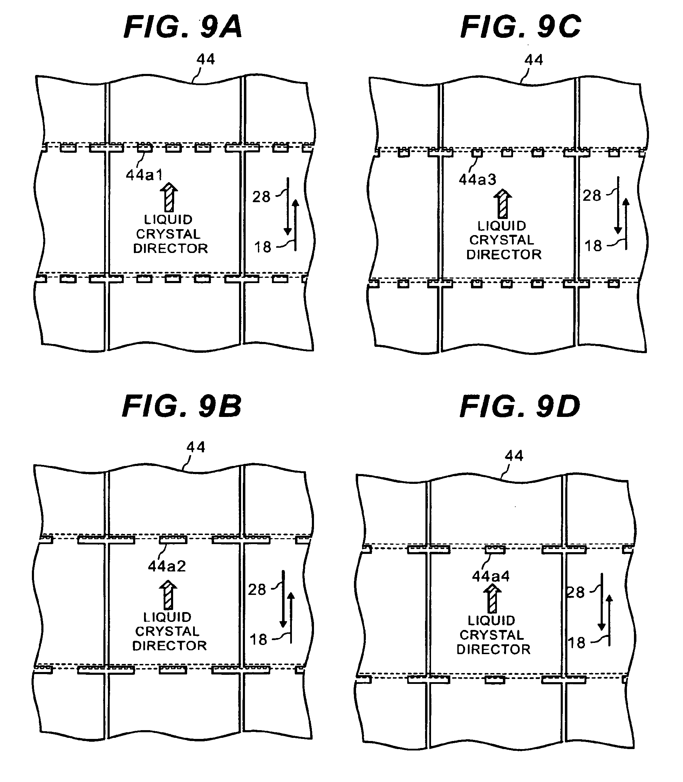

For example, an indium tin oxide (ITO) film which is a transparent film is formed on each substrate with a thickness of 50nm by CVD, vapor deposition, spattering, etc., and formed into one of the ITO electrode patterns shown in Fig. 9A to Fig. 9D by photolithography. In the segment electrodes, the later-described apertures 44a shown in Fig. 8 are formed. Liquid crystal display devices were actually fabricated by using the electrode patterns A1 to A4 shown in Fig. 9A to Fig. 9D with the apertures 44a1 to 44a4. The details of the apertures 44a1 to 44a4 will be described later.

Vertical alignment films are formed by flexographic printing on the substrates 1 and 2 on which the transparent electrodes 14 and 44 have been formed and baked, and thereafter a pretilt angle is generated by surface tratment such as rubbing etc. to the films. Eight types of the liquid crystal display devices were actually manufactured with the pretilt angle of 89.95 or 89.9 degrees respectively for the electrode patterns A1 to A4 shown in Fig. 9A to Fig. 9D.

To make an anti-parallel orientation, a pretilt direction of the segment electrode substrate (lower substrate) 2 is set to 6 o'clock direction (where the right side is 0 degree, 6 o'clock direction is a position 90 degrees rotated counterclockwise. The left side in Fig. 6), and a pretilt direction of the common electrode substrate (upper substrate) 1 is set to 12 o'clock direction (where the right side is 0 degree, 12 o'clock direction is a position 90 degrees rotated clockwise. The right side in Fig. 6). Any alignment methods which can realize a rubbing process uniformly in a pixel can be used. For example, ultraviolet radiation to the vertical alignment films, oblique deposition of metal oxide, alignment method using an oblique spatter film, etc. can be used. The rubbing process can be treated only to one of the substrates 1 and 2.

A cell thickness d is set to 4.0µm by spraying spacers. Liquid crystal with negative dielectric anisotropy (Δε<0, Δn<0.23) is used as liquid crystal material. There is no limitation on material properties such as Δn, etc. as far as the liquid crystal material with negative Δε.

An angle of absorption axis of the upper polarizer 21 is set to 45 degrees and that of the lower polarizer 11 is set to 135 degrees to arrange them in crossed Nicols. It is preferable for the polarizers to cross at 90 degrees for good black state; however, it can be shifted at several degrees. Moreover, either iodine type polarizers or dyed polarizers can be used for polarizer material.

Two C plates (ΔRe=0nm, ΔRth=220nm) are laminated between the polarizer and the substrate for each of the optical compensation plates 12 and 22. Optical compensation plates (A plates, C plates, B plates: biaxial films) can be inserted to both spaces between the polarizers and the substrates.

Fig. 7 is a schematic plan view showing the electrode pattern of the segment electrodes 44 and the common electrodes 14 in Fig. 6. This plan view depicts the liquid crystal display device shown in Fig. 16 observed from the normal direction. In this example, the common electrode 44 adopts the third electrode pattern shown in Fig. 9C described later.

In Fig. 7, the upper electrodes are the segment electrodes 44 in a rectangle electrode shape extending to six o'clock to 12 o'clock direction, and the upper electrodes are the common electrodes 14 in a rectangle electrode shape extending to a direction crossing the extending perpendicular direction of the lower electrodes. Each rectangle region where the segment electrode 24 and the common electrode 34 intersect forms one pixel.

The best viewing angle is the six o'clock direction because of a direction to which liquid crystal molecules in a mid-plane of the liquid crystal layer 3 tilt under application a voltage. On the other hand, angles degrading image quality because transmission of ON state drops by varying viewing angle toward the vertical direction exist in the opposite direction.

Fig. 8 is a schematic plan view showing the electrode pattern having apertures 44a.

As described in the above, it is considered that display nonuniformity is caused by that a position where a black cross is found is not fixed. For avoiding the display nonuniformity, it is necessary to avoid the generation of a black cross on an upper edge 7 of a pixel or to make a black cross to be uniformed among pixels.

As shown in Fig. 8, rectangle apertures 44a are formed on the segment electrodes 44 near the upper side edge 7 of a pixel where the liquid crystal directors (a direction to which liquid crystal molecules tilt) defined by the alignment process at the center of the pixel and the liquid crystal directors (a direction to which liquid crystal molecules tilt) defined by the oblique electric field near the edges of the pixel are opposite (reversed) to each other in the liquid crystal display device using the dot matrix electrode pattern.

As shown in Fig. 8, rectangle apertures 44a are formed on each segment electrode 44 at a region facing to a space between the adjacent common electrodes 14 extending to a horizontal direction. An upper edge (top side) of each aperture 44a is set in a range from the vertical center of the space between the adjacent common electrodes 14 to the upper edge (top side) of a pixel. A lower edge (bottom side) of each aperture 44a is set in a range from the upper edge (top side) of a pixel to a position inside a pixel. A distance W between the upper and lower edges of the aperture 44a, that is, a height of the aperture 44a is at least not less than the interval d of the adjacent common electrodes 14 (W≥1/2d). Moreover, the aperture 44a is configured to make at least a part of the aperture 44a overlap with a part of the space between the common electrodes in a plan view.

A plurality of the apertures 44a with a height W, a width s are arranged periodically with a space e between the adjacent apertures 44a. Although it is preferable to configure a plurality of apertures 44a in one pixel as shown in Fig. 8, it is possible to configure only one aperture 44a in one pixel. Moreover, although the apertures 44a are formed on the left and right side edges of the segment electrode 44 in the drawing, the apertures 44a can be formed with a predetermined space from the edges.

Fig. 9A to Fig. 9D are schematic plan views showing electrode patterns A1 to A4. Each plan view depicts the liquid crystal display device shown in Fig. 6 viewed from the vertical direction. Fig. 9A to 9D respectively correspond to the pattern A1 to A4 having apertures 44a with four types of sizes shown in the below table 1. In the table 1, the sizes of each part shown in Fig. 8 are shown. Moreover, in the table 1, "n" represents a number of the apertures 44a in one pixel. The electrode width "P" of the segment electrode 44 has a relationship "P=ns+e(n-1)" to the parameters. In this example, "P" is defined as 0.46mm and the interval between the electrodes is defined as 0.015mm.

**TABLE 1**

| PATTERN | w | n | s | e | s/e |
|---|---|---|---|---|---|
| A1 | 25µm | 5 | 0.0511mm | 0.0511mm | 1 |
| A2 | 25µm | 3 | 0.092mm | 0.092mm | 1 |
| A3 | 25µm | 5 | 0.0354mm | 0.0708mm | 1/2 |
| A4 | 25µm | 3 | 0.0657mm | 0.1314mm | 1/2 |

Fig. 9A is a schematic plan view showing electrode patterns A1. The pattern A is an example of configuring five apertures 44a1 in one pixel. The size of each aperture 44a1 is set as shown in the table 1 (height W=25µm , width s=0.0511mm, a space between the apertures 44a1 e=0.511mm (same as the width s of the apertures 44a1)).

Fig. 9B is a schematic plan view showing electrode patterns A2. The pattern A2 is an example of configuring three apertures 44a2 in one pixel. The size of each aperture 44a2 is set as shown in the table 1 (height W=25µm , width s=0.092mm, a space between the apertures 44a2 e=0.092mm (same as the width s of the apertures 44a2)).

Fig. 9C is a schematic plan view showing electrode patterns A3. The pattern A3 is an example of configuring five apertures 44a3 by in pixel. The size of each aperture 44a3 is set as shown in the table 1 (height W=25µm, width s=0.0354mm, a space between the apertures 44a3 e=0.0708mm (twice as the width s of the apertures 44a3)).

Fig. 9D is a schematic plan view showing electrode pattern A4. The pattern A4 is an example of configuring three apertures 44a4 in one pixel. The size of each aperture 44a4 is set as shown in the table 1 (height W=25µm, width s=0.0657mm, a space between the apertures 44a4 e=0.1314mm (twice as the width s of the apertures 44a4)).

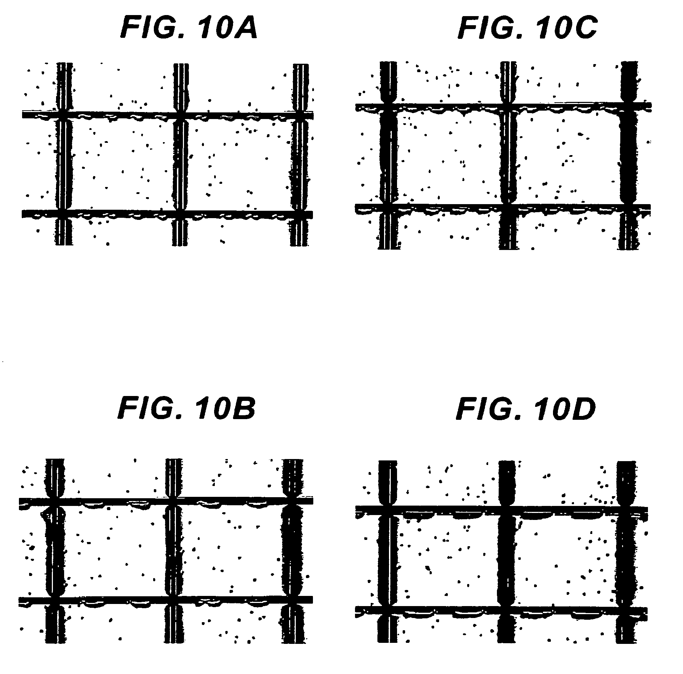

Fig. 10A to Fig. 10D are front observation photographs of the liquid crystal display devices 200. The photographs in Fig. 10A to 10D show the liquid crystal display device 200 which were actually fabricated by using the electrode patters shown in Fig. 9A to Fig. 9D. In these devices, only the common substrate 2 is rubbed in twelve o'clock direction with a pretilt angle of about 89.95 degrees.

As shown in Fig. 10A to Fig. 10D, patterns of black crosses appear uniformly in all the pixels in any cases of using the electrode patterns A1 to A4 when observing an upper portion (a region near the upper edge 7) of each pixel. From that, it is understood that the black crosses could be fixed.

Moreover, it is understood that no black cross was found near the edges of the apertures 44a. It is considered that the reason why no black cross is generated is because a direction of the oblique electric field turns to opposite direction at each aperture 44a and so the liquid crystal directors at that part becomes oriented to the same direction as the liquid crystal directors near the lower edge of the pixel by forming the apertures 44a. That is, it is considered that the liquid crystal directors do not reverse near the edges of the apertures 44a.

Although an aperture ratio of the electrodes is decreased by forming the apertures 44a, there is a tendency to increase an effective aperture ratio for one pixel because no black cross is appeared near the edges of the apertures 44a.

From the appearance, alignment nonuniformity was considerably improved with any one of the electrode patters A1 to A4 even if viewed from the anti-viewing angle, and display uniformity was obtained.

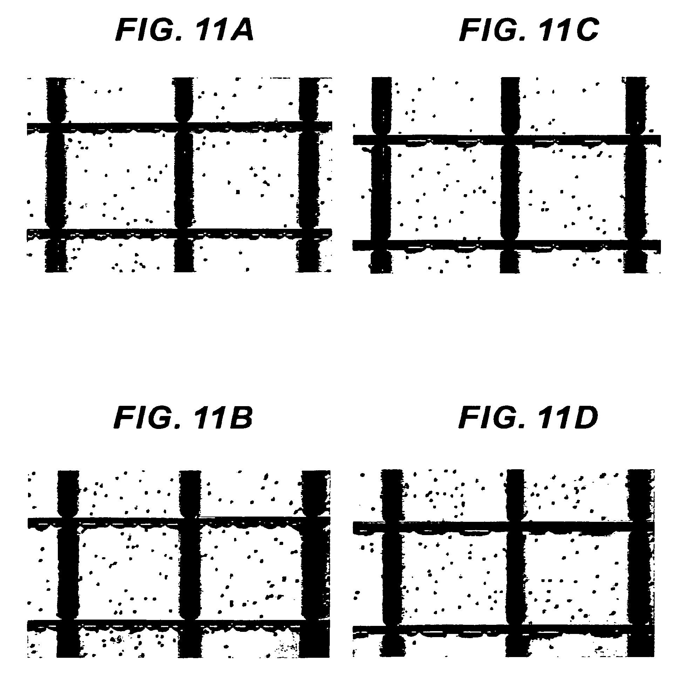

Fig. 11A to Fig. 11D are front observation photographs of liquid crystal display devices 200. The photographs in Fig. 11A to 11D show the liquid crystal display devices 200 which were actually fabricated by using the electrode patterns A1 to A4 shown in Fig. 9A to Fig. 9D. In these devices, to apply an anti-parallel orientation, the segment electrode substrate (lower substrate) 2 is rubbed to 6 o'clock direction and the common electrode substrate 1 is rubbed to 12 o'clock direction. The pretilt angle was set to about 89.9 degrees.

As shown in Fig. 11A to Fig. 11D, it can be observed that positions where black crosses were found were shifted from the center of each pixel to the edge of each pixel and effective aperture ratio in each pixel was increased by generating lower pretilt angle than that in the devices shown in Fig. 10A to Fig. 10D.

Moreover, it is understood that the black cross is not generated near the edge of the apertures 44a in the upper part of the pixel as same as the devices shown in Fig. 10A to Fig. 10D.

Furthermore, as shown in Fig. 11A to Fig. 11D, in case of using the electrode patterns A1 to A3, the black cross patterns appears uniformly in each pixel, and it is understood that the black crosses are fixed. However, as shown in Fig. 11D, in case of using the electrode pattern A4 in which a number of the apertures 44a is small and the width s of each aperture 44a is narrow, it is observed that a part of the black cross patterns falls into disorder. From that, it is considered that the space e=0.1314mm between the adjacent apertures 44a in the electrode pattern A4 is too wide to fix black cross patterns. Therefore, it is preferable for fixing black cross patterns to set the space e between the adjacent apertures 44a to not more than 0.092µm as in the pattern A2. Moreover, the width s of the aperture 44a is preferably set to less than the width P of the electrode.

From the appearances, display nonuniformity was not observed in any one of the electrode patterns even if viewed from the anti-viewing angle.

As described in the above, the apertures 44a are formed on the side 7 of the segment electrodes 44 where the directions of the liquid crystal directors (a direction to which liquid crystal molecules tilt) defined by the alignment process at the center of the pixel and the direction of the liquid crystal directors (a direction to which liquid crystal molecules tilt) defined by the oblique electric field near the edges of the pixel are opposite (reversed) to each other in the liquid crystal display device using the dot matrix electrode pattern. Therefore, generation of a black cross near the edge of each aperture 44a can be restrained and a block cross can be fixed in a space between the adjacent apertures 44a. Therefore, display nonuniformity occurred in about 70 degrees clockwise or counterclockwise from the anti-viewing angle can be cancelled, and display uniformity similar to that from the best viewing angle can be obtained from the anti-viewing angle.

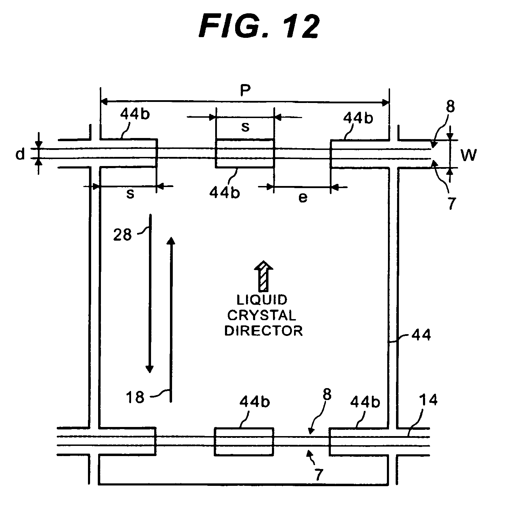

Fig. 12 is a schematic plan view showing the electrode pattern having apertures 44b . The present example differs from the previous example only in the electrode patterns but other structures remain the same as in the previous example.

As shown in Fig. 12, rectangle apertures 44b are formed on the segment electrodes 44 near the upper side edge 7 of a pixel where the directions of the liquid crystal directors (a direction to which liquid crystal molecules tilt) defined by the alignment process at the center of the pixel and the direction of the liquid crystal directors (a direction to which liquid crystal molecules tilt) defined by the oblique electric field near the edges of the pixel are opposite (reversed) to each other in the liquid crystal display device using the dot matrix electrode pattern.

As shown in Fig. 12, rectangle apertures 44b are formed on each segment electrode 44 at a region facing to a space between the adjacent common electrodes 14 extending to a horizontal direction. Differences between the second embodiment and the third embodiment is that a distance W between the upper and lower edges of the aperture 44b is larger than the interval d of the adjacent common electrodes 14 (W>d), and each aperture 44b is located across the vertically adjacent pixels in the third embodiment. An upper edge (top side) of each aperture 44b is positioned inside the upper pixel of the vertical adjacent pixels beyond the lower edge (bottom side) of the upper pixel. A lower edge (bottom side) of each aperture 44b is positioned inside the lower pixel of the vertical adjacent pixels beyond the upper edge (top side) of the lower pixel.

A plurality of the apertures 44b with a height W, a width s are arranged periodically with a space e between the adjacent apertures 44b. Although it is preferable to configure a plurality of apertures 44b in one pixel as shown in Fig. 12, it is possible to configure only one aperture 44b in one pixel. Moreover, although the apertures 44b are formed on the left and right side edges of the segment electrode 44 in the drawing, the apertures 44b can be formed with a predetermined space from the edges.

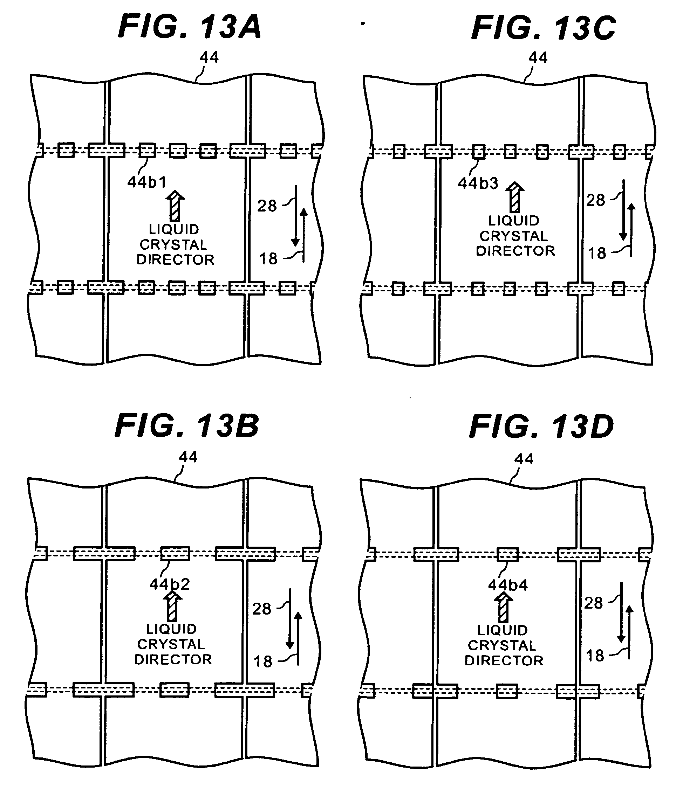

Fig. 13A to Fig. 13D are schematic plan views showing electrode patterns B1 to B4. Each plan view depicts the liquid crystal display device shown in Fig. 6 viewed from the normal direction. Fig. 13A to 13D respectively correspond to the pattern B1 to B4 having apertures 44b with four types of sizes shown in table 2. In the table 2, the sizes of each part shown in Fig. 12 are shown. Moreover, in the table 2, "n" represents a number of the apertures 44b in one pixel. The electrode width "P" of the segment electrode 44 has a relationship "P=ns+e(n-1)" to the parameters. In this example, "P" is defined as 0.46mm and the interval between the electrodes is defined as 0.015mm.

**TABLE 2**

| PATTERN | w | n | s | e | s/e |
|---|---|---|---|---|---|
| B1 | 45µm | 5 | 0.0511mm | 0.0511mm | 1 |
| B2 | 45µm | 3 | 0.092mm | 0.092mm | 1 |
| B3 | 45µm | 5 | 0.0354mm | 0.0708mm | 1/2 |
| B4 | 45µm | 3 | 0.0657mm | 0.1314mm | 1/2 |

Fig. 13A is a schematic plan view showing electrode pattern B1. The pattern B1 is an example of arranging five apertures 44b1 in one pixel. The size of the apertures 44b1 is set as shown in the table 2 (height W=45µm, width s=0.051mm, space between the apertures 44b1 e=0.051mm (same as the width s of the apertures 44b1)).

Fig. 13B is a schematic plan view showing electrode pattern B2. The pattern B2 is an example of arranging three apertures 44b2 in one pixel. The size of the apertures 44b2 is set as shown in the table 2 (height W=45µm, width s=0.092mm, a space between the apertures 44b2 e=0.092mm (same as the width s of the apertures 44b2)).

Fig. 13C is a schematic plan view showing electrode pattern B3. The pattern B3 is an example of arranging five apertures 44b3 in one pixel. The size of the apertures 44b3 is set as shown in the table 2 (height W=45µm, width s=0.0354mm, a space between the apertures 44b3 e=0.0708mm (twice as the width s of the apertures 44b3)).

Fig. 13D is a schematic plan view showing electrode pattern B4 . The pattern B4 is an example of arranging three apertures 44b4 in one pixel. The size of the apertures 44b4 is set as shown in the table 2 (height W=45µm, width s=0.0657mm, a space between the apertures 44b4 e=0.1314mm (twice as the width s of the apertures 44b4)).

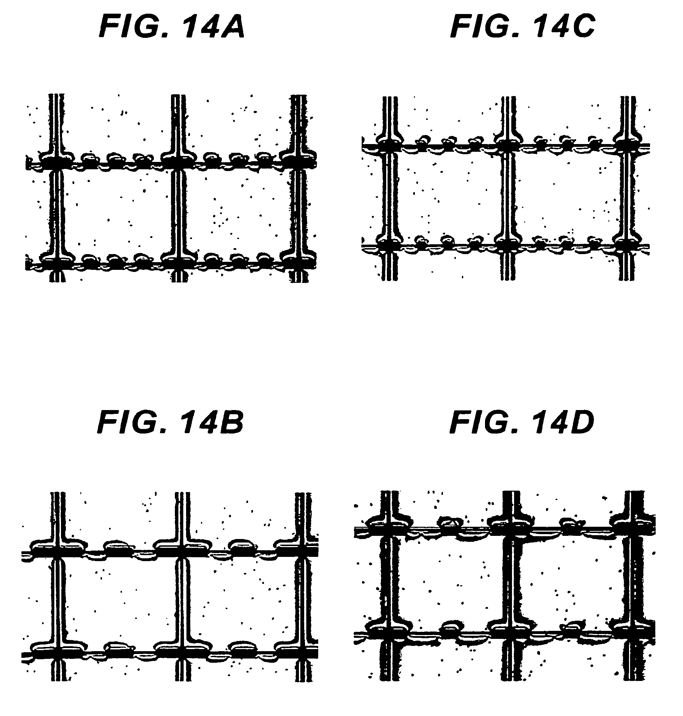

Fig. 14A to Fig. 14D are front observation photographs of liquid crystal display devices 200. The photographs in Fig. 14A to 14D show the liquid crystal display device 200 which were actually fabricated by using the electrode patters B1 to B4 shown in Fig. 13A to Fig. 13D. In these devices, only the common substrate 2 was rubbed in twelve o'clock direction with a pretilt angle of about 89.95 degrees.

As shown in Fig. 14A to Fig. 14D, patterns of black crosses appear uniformly in all the pixels in any cases of using the electrode patterns B1 to B4 when observing an upper portion (a region near the upper edge 7) of each pixel. From that, it is understood that the black crosses could be fixed. A unique pattern was observed in appearance positions of black crosses near the edges of the pixels. Around the aperture 44b black crosses appeared upward along with the upper side of the aperture 44b, whereas around spaces between the apertures 44b black crosses appeared downward along with the upper edges of the common electrodes 14. It is caused by that the directions of the oblique electric field and the easy axis of the alignment film on the substrate are reversed in the regions of the apertures 44b and the spaces between the adjacent apertures 44b. Comparing to the previous example, an effective aperture ratio drops slightly by generation of the black crosses in the lower part of the pixels; however, there is a merit in which a margin for allowing a positioning error of the segment substrate 2 and the common substrate 1 can be enlarged by setting the height of the apertures 44b higher than the previous example.

From the appearance, alignment nonuniformity was considerably improved with any one of the electrode patterns B1 to B4 even if viewed from the anti-viewing angle, and display uniformity was obtained. Moreover, it was confirmed that the positioning error was about ±20µm, and there was no alignment nonuniformity found when viewed from the anti-viewing angle even if the positioning error occurred.

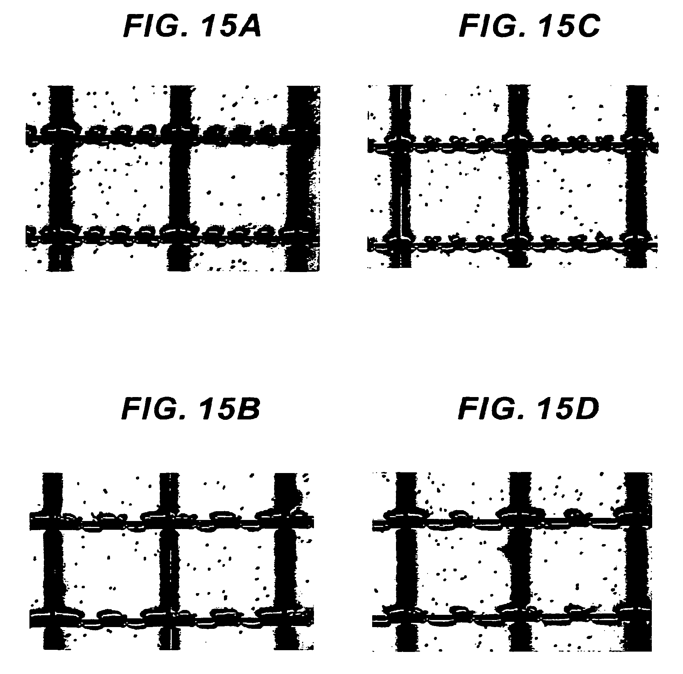

Fig. 15A to Fig. 15D are front observation photographs of liquid crystal display devices 200. The photographs in Fig. 15A to 15D show the liquid crystal display devices 200 which were actually fabricated by using the electrode patters B1 to B4 shown in Fig. 13A to Fig. 13D. In these devices, to make an anti-parallel orientation, the segment electrode substrate (lower substrate) 2 is rubbed to 6 o'clock direction and the common electrode substrate 1 is rubbed to 12 o'clock direction. The pretilt angle was set to about 89.9 degrees.

As shown in Fig. 15A to Fig. 15D, it can be observed that positions where black crosses were found were shifted from the center of each pixel to the edge of each pixel and effective aperture ratio in each pixel was increased by generating lower pretilt angle than that in the devices shown in Fig. 14A to Fig. 14D.

Moreover, it is understood that the black cross is not generated near the edge of the apertures 44b in the upper part of the pixel as same as the devices shown in Fig. 14A to Fig. 14D. Although patterns of the black crosses slightly varied in the pixels in a part of the electrode patterns, the display nonuniformity was not observed in any patterns even if observing from the anti-viewing angle in appearance.

As described in the above, similar to the second embodiment, display nonuniformity occurred in about 70 degrees clockwise or counterclockwise from the anti-viewing angle can be cancelled, and display uniformity similar to that from the best viewing angle can be obtained from the anti-viewing angle. Moreover, height of the apertures44b is enlarged, it makes possible to allow for a larger margin of the positioning error of the upper and the lower substrates.

Moreover, generation of black crosses largely depends on a pretilt angle. According to consideration of the inventors, display nonuniformity was not recognized from the anti-viewing angle if the pretilt angle is not more than 89.5 degrees. Therefore, the above-described embodiment of the present invention is suitable for a liquid crystal display device with a pretilt angle of 89.5 degrees or more.

Furthermore, in the above-described embodiment, the rubbing process to the perpendicular direction crossing the lower edges of the pixel was explained; however, the rubbing direction is not limited to that. For example, the inventors confirmed that the embodiment is effective to a twisted alignment condition wherein the liquid crystal molecules in mid-plane oriented to that direction.

The present invention has been described in connection with the preferred embodiment. The invention is not limited only to the above embodiments. It is apparent that various modifications, improvements, combinations, and the like can be made by those skilled in the art, within the scope of the appended claims.

## Claims

1. A liquid crystal display device (100), comprising:
a pair of transparent substrates (13, 23) facing to each other at a predetermined gap;
a plurality of first transparent electrodes (24) in a rectangle shape formed on a facing surface of one of the pair of transparent substrates;
a plurality of second transparent electrodes (34) in a rectangle shape formed on a facing surface of another one of the pair of the transparent substrates and crossing perpendicularly the first transparent electrodes; each intersection of the first and the second transparent electrodes forms one pixel,
mono-domain vertical alignment films (15, 25) formed on both facing surfaces of the pair of the transparent substrates, the mono-domain vertical alignment films on one side or on both sides being treated by a uniform alignment process in parallel to a longitudinal direction of the second transparent electrodes;
a vertical alignment liquid crystal layer (3) with a pretilt angle placed between the pair of the transparent substrates; and
a pair of polarizers (11, 21) attaching the pair of the transparent substrates, wherein
an alignment direction of liquid crystal molecules at a center of the pixel in a mid-plane of the liquid crystal layer in an ON-state is in parallel to the longitudinal direction of the second transparent electrodes, and
at least one triangle cut (6) is formed along the edge (7) of each first transparent electrode forming one side of the pixel where said alignment direction and a direction in which liquid crystal molecules near said edge of the pixel are tilted by an oblique electric field at said edge are opposite to each other.

2. The liquid crystal display device according to claim 1, wherein a plurality of triangle cuts (6) are formed in one pixel, and the triangle cuts (6) are aligned with equal space and formed symmetrically with respect to a center line of the pixel along the longitudinal direction of the second transparent electrodes (34).

3. The liquid crystal display device according to claim 1 or 2, wherein the triangle cut (6) is in a shape of an isosceles right triangle.

4. The liquid crystal display device according to any one of the preceding claims, wherein a length of a slope of the triangle cut (6) is not less than 70µm.

5. The liquid crystal display device according to claim 2, wherein the space between the triangle cuts (6) is not less than 70µm.

6. The liquid crystal display device according to any one of the preceding claims, wherein the uniform alignment process is done by a rubbing process.

7. The liquid crystal display device according to any one of the preceding claims, wherein the alignment easy axes of the vertical alignment films are arranged to be an anti-parallel alignment.

8. The liquid crystal display device according to any one of the preceding claims, wherein the pretilt angle of the liquid crystal layer is not less than 89.5 degrees.

## Patentansprüche

1. Flüssigkristallanzeigevorrichtung (100), die Folgendes aufweist:
ein Paar von transparenten Substraten (13, 23), die mit einem vorbestimmten Spalt zueinander weisen;
eine Vielzahl von ersten transparenten Elektroden (24) in einer rechteckigen Form, die auf einer zugewandten Oberfläche von einer des Paars von transparenten Substraten gebildet ist;
eine Vielzahl von zweiten transparenten Elektroden (34) in einer rechteckigen Form, die auf einer zugewandten Oberfläche eines anderen des Paars von transparenten Substraten gebildet ist, und die senkrecht zu den ersten transparenten Elektroden queren;
wobei jeder Abschnitt der ersten und der zweiten transparenten Elektroden ein Pixel bildet,
mono- bzw. eindomänige, vertikale Ausrichtungsfilme (15, 25), die auf beiden zugewandten Oberflächen des Paars von transparenten Substraten gebildet sind, wobei die eindomänigen, vertikalen Ausrichtungsfilme auf einer Seite oder auf beiden Seiten einem gleichmäßigen Ausrichtungsprozess parallel zu einer Längsrichtung der zweiten transparenten Elektroden unterzogen werden; eine Vertikalausrichtungs-Flüssigkristallschicht (3) mit einem vorgeneigten (pretilt) Winkel, die zwischen dem Paar der transparenten Substrate angeordnet ist; und
ein Paar von Polarisatoren (11, 21), die das Paar der transparenten Substrate anbringen, wobei
eine Richtung der Ausrichtung der Flüssigkristallmoleküle an einer Mitte des Pixels in eine Mittelebene der Flüssigkristallschicht in einem AN-Zustand parallel zu der Längsrichtung der zweiten transparenten Elektroden ist, und
zumindest ein dreieckiger Ausschnitt (6) entlang der Kante (7) jeder ersten transparenten Elektrode gebildet ist, die eine Seite des Pixels bildet, wo die Richtung der Ausrichtung und eine Richtung, in der die Flüssigkristallmoleküle nahe der Kante des Pixels durch ein schräges, elektrisches Feld bei der Kante geneigt sind, einander gegenüberliegend sind.

2. Flüssigkristallanzeigevorrichtung gemäß Anspruch 1, wobei eine Vielzahl von dreieckigen Ausschnitten (6) in einem Pixel gebildet ist, und die dreieckigen Ausschnitte (6) mit gleichem Raum ausgerichtet und symmetrisch in Bezug auf einer Mittellinie des Pixels entlang der Längsrichtung der zweiten transparenten Elektroden (34) gebildet sind.

3. Flüssigkristallanzeigevorrichtung gemäß Anspruch 1 oder 2, wobei der dreieckige Ausschnitt (6) die Form eines gleichschenkligen, rechtwinkligen Dreiecks besitzt.

4. Flüssigkristallanzeigevorrichtung gemäß einem der vorangehenden Ansprüche, wobei eine Länge einer Neigung des dreieckigen Ausschnitts (6) nicht weniger als 70 µm beträgt.

5. Flüssigkristallanzeigevorrichtung gemäß Anspruch 2, wobei der Raum zwischen den dreieckigen Ausschnitten (6) nicht weniger als 70 µm beträgt.

6. Flüssigkristallanzeigevorrichtung gemäß einem der vorangehenden Ansprüche, wobei der gleichmäßige Ausrichtungsprozess durch einen Abrieb- bzw. Reibeprozess durchgeführt wird.

7. Flüssigkristallanzeigevorrichtung gemäß einem der vorangehenden Ansprüche, wobei die ausrichtungsleichten Achsen der vertikalen Ausrichtungsfilme so angeordnet sind, dass sie eine antiparallele Ausrichtung aufweisen.

8. Flüssigkristallanzeigevorrichtung gemäß einem der vorangehenden Ansprüche, wobei der vorab geneigte bzw. vorgeneigte (pretilt) Winkel der Flüssigkristallschicht nicht weniger als 89,5 Grad beträgt.

## Revendications

1. Dispositif d'affichage à cristaux liquides (100), comprenant :
deux substrats transparents (13, 23) face à face séparés par un intervalle prédéterminé ;
une pluralité de premières électrodes transparentes (24) de forme rectangulaire formée sur une surface en regard de l'un des deux substrats transparents ;
une pluralité de deuxièmes électrodes transparentes (34) de forme rectangulaire formée sur une surface en regard de l'autre des deux substrats transparents et croisant perpendiculairement les premières électrodes transparentes ;
chaque intersection des premières et deuxièmes électrodes transparentes formant un pixel,
des films à alignement vertical mono-domaine (15, 25) formés sur les surfaces en regard des deux substrats transparents, les films à alignement vertical mono-domaine sur un côté ou sur les deux côtés étant traités par un procédé d'alignement uniforme parallèle à une direction longitudinale des deuxièmes électrodes transparentes ;
une couche de cristaux liquides à alignement vertical (3) avec un angle de pré-inclinaison, placée entre les deux substrats transparents ; et
deux polariseurs (11, 21) fixés aux deux substrats transparents, dans lequel une direction d'alignement de molécules de cristaux liquides au centre du pixel dans un plan intermédiaire de la couche de cristaux liquides dans un état de marche est parallèle à la direction longitudinale des deuxièmes électrodes transparentes, et
au moins une découpe triangulaire (6) est formée le long du bord (7) de chaque première électrode transparente formant un côté du pixel où la direction d'alignement et une direction dans laquelle des molécules de cristaux liquides proches du bord du pixel sont inclinées par un champ électrique oblique au niveau du bord, sont opposées entre elles.

2. Dispositif d'affichage à cristaux liquides selon la revendication 1, dans lequel une pluralité de découpes triangulaires (6) est formée dans un pixel, et les découpes triangulaires (6) sont alignées avec un espacement régulier et formées symétriquement par rapport à une ligne centrale du pixel suivant la direction longitudinale des deuxièmes électrodes transparentes (34).

3. Dispositif d'affichage à cristaux liquides selon la revendication 1 ou 2, dans lequel la découpe triangulaire (6) a la forme d'un triangle droit isocèle.

4. Dispositif d'affichage à cristaux liquides selon l'une quelconque des revendications précédentes, dans lequel la longueur d'une pente de la découpe triangulaire (6) n'est pas inférieure à 70 µm.

5. Dispositif d'affichage à cristaux liquides selon la revendication 2, dans lequel l'espace entre les découpes triangulaires (6) n'est pas inférieur à 70 µm.

6. Dispositif d'affichage à cristaux liquides selon l'une quelconque des revendications précédentes, dans lequel le procédé d'alignement uniforme est réalisé par un procédé de frottement.

7. Dispositif d'affichage à cristaux liquides selon l'une quelconque des revendications précédentes, dans lequel les axes de facilitation d'alignement des films à alignement vertical sont agencés pour être dans un alignement antiparallèle.

8. Dispositif d'affichage à cristaux liquides selon l'une quelconque des revendications précédentes, dans lequel l'angle de pré-inclinaison de la couche de cristaux liquides n'est pas inférieur à 89,5°.
